# NEW EUROPEAN PATENT SPECIFICATION

(11) **EP 2 780 102 B2**
(45) Date of publication and mention of the opposition decision: **05.08.2020**
(45) Mention of the grant of the patent: 06.12.2017
(21) Application number: 12724017.4
(22) Date of filing: 14.05.2012
(51) Int. Cl.: B01D 53/94, B01J 23/38, B01J 23/42, B01J 23/44, B01J 23/63, C01G 25/00

(54) **METHOD FOR TREATING AND EXHAUST GAS WITH A SUPPORTED NOBLE METAL CATALYST**
METHODE ZUR ABGASBEHANDLUNG MIT EINEM TRAGERGESTÜTZTEM EDELMETALLKATALYSATOR
MÉTHODE POUR TRAITER DES GAZ D'ÉCHAPPEMENT AVEC UN CATALYSEUR SUPPORTÉ À BASE D'UN MÉTAL NOBLE

(30) Priority: 17.11.2011 US 201161561095 P
(43) Date of publication of application: 24.09.2014
(73) Proprietor: Johnson Matthey Public Limited Company, London EC4A 4AB (GB)
(72) Inventor: CHEN, Hai-Ying, Conshonhocken, PA 19428 (US); REINING, Arthur, J., Christiana, PA 17509 (US); CHANG, Hsiao-Lan, Berwyn, PA 19312 (US)
(74) Representative: Wilson, Nicola Ann
(86) International application number: PCT/US2012/037752
(87) International publication number: WO 2013/074147

(56) References cited:
- JP-A- 2006 231 280
- KR-A- 20110 018 681
- US-A1- 2002 015 931
- US-A1- 2007 191 219
- US-A1- 2008 141 584
- US-A1- 2009 269 263
- DATABASE WPI Week 200667 Thomson Scientific, London, GB; AN 2006-640108 XP002682213, & JP 2006 231280 A (MITSUBISHI JUKOGYO KK) 7 September 2006 (2006-09-07)
- DATABASE WPI Week 201119 Thomson Scientific, London, GB; AN 2011-C08342 XP002682214, & KR 2011 0018681 A (KOREA INST ENERGY RES) 24 February 2011 (2011-02-24)
- Patrick Gélin et al: "Complete oxidation of methane at low temperature over noble metal based catalysts: a review", Applied Catalysis B: Environmental, Elsevier, AMSTERDAM, NL, vol. 39, no. 1, 1 November 2002 (2002-11-01), pages 1-37, AMSTERDAM, NL ISSN: 0926-3373, DOI: 10.1016/S0926-3373(02)00076-0

## Description

### BACKGROUND

### 1. Field of Invention

The present invention relates to a method for catalytically oxidizing short-chain saturated hydrocarbons in a lean burn exhaust gas.

### 2. Description of Related Art

There is a trend towards using compressed natural gas as fuel in heavy-duty internal combustion engines, at least partially because of the perception that such engines have "cleaner" exhaust gas emissions compared to liquid diesel-fuelled engines. However, the treatment of exhaust gas generated by combusting natural gas or other fuel having a high methane concentration can be problematic, particularly when the exhaust gas contains an excess of oxygen, which is often the case for diesel engines and turbines for stationary power production. For example, methane typically has a low reactivity under conditions suitable to treat other undesirable lean-burn exhaust gas components, such as NOₓ. Thus, reduction of methane emissions from compressed natural gas vehicles, turbines for stationary power production, and internal combustion engines in general, is of great interest.

Palladium and platinum/palladium catalyst are known oxidation catalysts for methane. (See, e.g., US 5,131,224) These catalysis typically operates at high temperatures (e.g., >500 °C) in order to achieve high methane conversion efficiency. To improve the efficiency of the heterogeneous catalysis, various high-surface area supports have been suggested including zeolites and refractory-oxides such as alumina, ceria, titania, tantalum oxide, silica, zirconia, zirconia impregnated with a rare earth metal, and alumina containing surface area stabilizers such as barium oxide, lanthanum oxide, and cerium oxide. (See, e.g., US 5,216,875 and US 5,384,300).

Conventional commercial methane oxidation catalysts comprise alumina supported Pd or Pt/Pd catalysts. ZrO₂ supported palladium catalysts have been reported in the literature to have particularly high methane oxidation activity (e.g., J. Catalysis 179(1998)431). However, ZrO₂ supported palladium catalysts suffer poor thermal stability. For example, the '875 patent reports that zirconia promotes premature decomposition of PdO to Pd at high temperatures and inhibits reformation to a relatively low temperature. Compared to other catalyst, including Pd/Alumina, Pd/Ceria, Pd/Titania, and Pd/Tantalum Oxide, Pd/Zirconia has a relatively low temperature at which Pd metal is stable in an oxidizing environment. According to the '875 patent, this property makes Pd/ZrO₂ undesirable for methane oxidation.

Accordingly, there remains a need for improved methane oxidation catalysts.

JP 2006-231280 A discloses a solid oxidation catalyst for combustion constituted by supporting an active component which contains at least one element and/or one compound selected from Group VIII metal elements and Group VIII metal oxides, or a mixture of such active component and a rare earth metal oxide, on a monolithically molded honeycomb carrier which contains alumina or a monolithically molded honeycomb carrier, which contains a composite oxide of at least one of the oxides selected from zirconia, magnesia, silica and a rare earth metal and alumina.

KR 2011-0018681 discloses a low-temperature catalyst for combusting organic compounds including a carrier formed with zirconia or a complex compound of the zirconia and rare earth metal oxides. The carrier includes a precious metal catalyst component. The low-temperature catalyst has the zirconium content inside the carrier of 50∼100wt%.

### SUMMARY OF THE INVENTION

Applicants have discovered that certain palladium (Pd) and platinum/palladium (Pt/Pd) catalysts supported on rare earth metal stabilized ZrO2 exhibit significantly improved methane oxidation activity and hydrothermal stability compared to conventional methane oxidation catalyst. This discovery is surprising because zirconia supported palladium was believed to be thermally unstable. In contrast to the present invention, impregnating alumina with rare-earth metals does not appear to produce the same beneficial effect. Moreover, the observed improvement in performance of the present catalyst is not directly attributable to the retention of the support's surface area after exposure to high temperatures. Instead, it is believed that the combination of zirconia, rare earth metal, and palladium and/or platinum/palladium creates a synergy wherein the materials work together to produce the improved performance. This synergy can be used for treating combustion exhaust gas containing relatively large amounts of methane and oxygen, such as the exhaust gas generated by burning compressed natural gas (CNG), operating CNG vehicles, or using methane fuel for operating a gas turbine for stationary, locomotive, or marine applications.

Accordingly, provided is a method for treating exhaust gas in accordance with claim 1.

### BRIEF DESCRIPTION OF THE DRAWINGS

Figure 1 is a chart depicting CH₄ conversion data of catalyst according to the present invention.
Figure 2 is a chart depicting performance data of catalyst according to the present invention.

### DETAILED DESCRIPTION OF PREFERRED EMBODIMENTS OF THE INVENTION

The present invention concerns improvements in emission control, and in particular provides methods for catalytically treating a heated gas stream containing methane, in an oxidative environment. In certain embodiments, the invention concerns natural gas-fuelled internal combustion engines provided with catalytic emission control systems, typically for vehicular use but which can also be used for treating emissions from stationary engines for power production or for combined heat and power (CHP) systems. Throughout this specification and claims, the term "diesel engine" will be used to refer to compression ignition internal combustion engines. The present invention may be applied both to newly-built engines and to diesel engines modified to run on some portion of natural gas rather than strictly on liquid diesel fuel. Conveniently, the natural gas can be stored as compressed natural gas (CNG), or if appropriate as liquefied natural gas (LNG).

The term "natural gas" includes gases containing more than 30% by volume of methane obtained from mineral sources such as natural gas wells, and gases associated with other higher hydrocarbons, from the gasification of bio-masses, from coal gasification processes, from landfill sites, or produced by hydrogenation of carbon oxides and other methane forming processes.

In a preferred embodiment, the methane oxidation catalyst comprises at least one noble metal selected from ruthenium, rhodium, palladium, silver, rhenium, osmium, iridium, platinum, and gold, or combinations thereof disposed on a high surface area support comprising a solid solution of zirconia, silica and yttrium oxide in accordance with the claims. Preferred noble metals include platinum group metals, particularly palladium and platinum. In certain embodiments, the noble metal consists of palladium. In certain other embodiments, the noble metal consists of palladium and platinum. In certain embodiments, the noble metal is essentially free of rhodium. The noble metals may be present as a free metal, metal ion, or as a metal oxide, such as palladium oxide (PdO).

Palladium is generally preferred for high efficiency application, but can be susceptible to sulfur poisoning. Other noble metals, such as platinum, can be present in the catalyst to improve performance in some applications. For example, in certain embodiments that involve palladium in combination with at least one other noble metal such as platinum or rhodium, the palladium loading to the total noble metal loading on the support comprises at least about 50 mole percent palladium, at least about 80 mole percent palladium, at least about 90 mole percent palladium, or at least about 95 mole percent palladium. In certain embodiments, palladium and platinum are present in a weight ratio of about 1:1, about 2:1, about 5:1, about 10:1, or about 20:1.

Superior hydrothermal stability and catalytic oxidation performance has been found when the noble metals described above are disposed on a support material comprising a solid solution of zirconia, silica and yttrium oxide in accordance with the claims. The amount of noble metal or noble metal oxide in the catalyst is not particularly limited. However, in certain embodiments, the noble metal is present in an amount of about 0.01 to about 10 weight percent, such as about 0.1 to about 2 weight percent, about 1 to about 2 weight percent, or about 2 to about 5 weight percent, all based on the total weight of the noble metal and the carrier. Any conventional means of combining the noble metal and the support can be used, such as by incipient wetness, absorption, vapour deposition, prefixing, and combining the noble metal and support directly into a washcoat slurry. The resulting metal loaded carrier can be dried and/or calcined at a temperature of about 450 °C to about 700 °C, more preferably about 500 °C to about 650 °C, to form a powder which may then be coated on a substrate or added to an extrusion paste to form an extruded product.

The support contains at least about 75 weight percent zirconia, such as about 75 to about 95 weight percent zirconia, or about 85 to about 90 weight percent zirconia, all based on the total weight of silica. In a particularly preferred embodiment, the support comprises about 85 to about 90 weight percent zirconia and about 10 to about 15 weight percent silica, based on the total weight of the refractory oxides in the support material.

Further rare earth metals useful in the present invention include lanthanides (lanthanum, cerium, praseodymium, neodymium, promethium, samarium, europium, gadolinium, terbium, dysprosium, holmium, erbium, thulium, ytterbium, and lutetium) as well as scandium. Each of these metals can be included singularly or in combination with one or more other rare earth metals. Preferred rare earth metals include lanthanum, praseodymium, neodymium, europium, gadolinium, holmium, erbium, thulium, ytterbium, yttrium, and combinations thereof. In certain embodiments, preferred rare earth metals include lanthanum, neodymium, yttrium, and combinations thereof, particularly, yttrium and combinations of lanthanum and neodymium. Particularly useful are oxides of the abovementioned metals, such as La₂O₃ and Nd₂O₃. In certain embodiments, the support is essentially free of cerium. According to the invention, the support is a solid solution of zirconia, silica and yttrium oxide in accordance with the claims, particularly prior to being impregnated with noble metal.

According to the invention, the support comprises a stabilizing amount of yttrium oxide. In certain embodiments, the support comprises from about 5 to about 10 weight percent or about 15 to about 20 weight percent. In a preferred embodiment, the support comprises about 5 to 10 weight percent of Y₂O₃. In another preferred embodiment, the support comprises about 15 to about 20 weight percent of a combination of two or more rare earth metal oxides, such as La₂O₃ and Nd₂O₃, with the Y₂O₃. For certain embodiments that utilize La₂O₃ along with one or more other rare earth metal oxides, the La₂O₃ is present in a minority amount based on the total weight of the rare earth metal oxides present in the support.

According to the invention, the zirconia is stabilized with up to about 20 weight percent silica in combination with yttrium oxide. Still according to the invention, the support comprises about 1 to about 20 weight percent, more preferably about 5 to about 15, and even more preferably about 6 to about 10 weight percent yttrium oxide, about 1 to about 20 weight percent, more preferably about 5 to about 15 weight percent, and even more preferably about 9 to about 13 weight percent silica, with the balance being zirconia.

Typical applications using the oxidation catalysts of the present invention involve heterogeneous catalytic reaction systems (i.e., solid catalyst in contact with a gas and/or liquid reactant). To improve contact surface area, mechanical stability, and fluid flow characteristics, the catalysts can be supported on a substrate. For example, the catalyst compositions of the present invention can be in the form of a washcoat, preferably a washcoat that is suitable for coating a substrate such as a metal or ceramic flow through monolith substrate or a filtering substrate, such as a wall-flow filter or sintered metal or partial filter. Accordingly, another aspect of the invention is a washcoat comprising a catalyst component as described herein. In addition to the catalyst component, washcoat compositions can further comprise other, non-catalytic components such as carriers, binders, stabilizers, and promoters. These additional components do not necessarily catalyse the desired reaction, but instead improve the catalytic material's effectiveness, for example by increasing its operating temperature range, increasing contact surface area of the catalyst, increasing adherence of the catalyst to a substrate, etc. Examples of such optional, non-catalytic components can include non-doped alumina, titania, non-zeolite silica-alumina, ceria, and zirconia that are present in catalyst composition, but serve one or more non-catalytic purposes.

The amount of catalyst loaded on a substrate is not particularly limited, but should be present in an amount to provide high catalytic activity, low backpressure, and low economic cost. The total amount of oxidation catalyst on the catalyst will depend on the particular application, but could comprise about 0.1 (6.1 g/l) to about 15 g/in³ (915.4 g/l), about 1 (61.0 g/l) to about 7 g/in³ (427.2 g/l), about 1 (61.0 g/l) to about 5 g/in³ (305.1 g/l), about 2 (122.0 g/l) to about 4 g/in³ (244.1 g/l), or about 3 (183.1 g/l) to about 5 g/in³ (305.1 g/l). Typical noble metal loadings, particularly Pd and/or Pd/Pt loadings range from about 25 g/ft³ (0.88 g/l) to about 300 g/ft³ (10.59 g/l), for example about 50 g/ft³ (1.77 g/l) to about 200 g/ft³ (7.06 g/l), about 100 g/ft³ (3.53 g/l) to about 200 g/ft³ (7.06 g/l), and about 125 g/ft³ (4.41 g/l) to about 150 g/ft³ (5.30 g/l). Examples of noble metal loading consisting only of palladium include about 100 (3.53 g/l) to about 200 g/ft³ (7.06 g/l) of Pd, and about 125 (4.41 g/l) to about 175 g/ft³ (6.18 g/l) of Pd. Examples of noble metal loading consisting only of palladium and platinum include about 10 (0.35 g/l) to about 40 g/ft³ (1.41 g/l) of Pt and about 50 (1.77 g/l) to about 150 g/ft³ (5.30 g/l) of Pd, and about 15 (0.53 g/l) to about 25 g/ft³ (0.88 g/l) of Pt and about 75 (2.65 g/l) to about 125 g/ft³ (4.41 g/l) of Pd. In other embodiments, the noble metal loading consists of about 200 (7.06 g/l) to about 500 g/ft³ (17.66 g/l) of Pd and about 20 (0.71 g/l) to about 100 g/ft³ (3.53 g/l) of Pt.

Substrates are not particularly limited and can include corrugated metal, plates, foams, honeycomb monoliths, and the like. Preferred substrates, particular for mobile applications, include flow through monolithic substrates, wall-flow filters, such as wall-flow ceramic monoliths, and flow through filters, such as metal or ceramic foam or fibrous filters. In addition to cordierite, silicon carbide, silicon nitride, ceramic, and metal, other materials that can be used for the porous substrate include aluminium nitride, silicon nitride, aluminium titanate, α-alumina, mullite e.g., acicular mullite, pollucite, a thermet such as AbOsZFe, Al₂O₃/Ni or B₄CZFe, or composites comprising segments of any two or more thereof. Preferred materials include cordierite, silicon carbide, and alumina titanate. In a preferred embodiment, the substrate is a flow-through monolith comprising many channels that are separated by thin walls, that run substantially parallel in an axial direction over a majority of the length of the substrate body, and that have a square cross-section (e.g., a honeycomb monolith). The honeycomb shape provides a large catalytic surface with minimal overall size and pressure drop.

The coating process may be carried out by methods known per se, including those disclosed in EP 1 064 094, which is incorporated herein by reference.

Other preferred substrates, particularly for stationary applications, include plate substrates comprising a series of thin parallel plates coated with the oxidation catalyst. Although plate substrates typically require more space compared to honeycomb substrates, plate substrates are less prone to the choking effect of soot and dust. The plate substrate can be of any material, but are typically sheets of metal that are either flat or corrugated. Preferably, the catalyst is disposed on multiple stacked corrugated plates that are housed in modular units.

In certain embodiments, the catalyst can be formed into pellets and collectively arranged in a pellet bed.

The abovementioned catalysts are well suited for oxidation of methane in an exhaust gas derived from combustion of natural gas, particularly when the exhaust gas contains an excess of oxygen. As used herein, the phrase, "exhaust gas containing an excess of oxygen" means that the exhaust gas to be treated with the catalyst of the present invention is an exhaust gas containing oxidizing components (such as oxygen and nitrogen oxides) in amounts larger than necessary to completely oxidize reducing components which coexist therewith. In certain embodiments, the oxidizing components comprises at least about 50 weigh percent O₂, at least about 90 weight percent O₂, or is essentially O₂. Accordingly, an aspect of the invention provides a method for treating exhaust gas comprising the steps of (1) contacting an exhaust gas containing an excess of oxygen and methane to an oxidizing catalyst, and (2) oxidizing at least a portion of methane to produce CO₂ and H₂O; wherein the oxidizing catalyst comprises at least one noble metal loaded on rare-earth stabilized zirconia as described herein, wherein
the exhaust gas has a methane concentration of about 10 ppmv (parts-permillion by volume) to about 10,000 ppmv, for example about 200 to about 2000 ppmv, about 200 ppmv to about 500 ppmv, and about 800 ppmv to about 1500 ppmv. In certain embodiments, the method of the present invention involves an exhaust gas stream having about 0.01 lb/hr (4.5 g/hr) of methane to about 1.0 lb/hr (453.6 g/hr) methane, for example about 0.05 (22.7 g/hr) to about 0.5 Ib/hr (226.8 g/hr) methane, about 0.05 (22.7 g/hr) to about 0.15 (68.0 g/hr) lb/hr methane, and about 0.1 (45.4 g/hr) to about 0.2 lb/hr (90.7 g/hr) methane.

In certain embodiments, the exhaust comprises methane and NOₓ (which is defined as nitric oxide (NO), nitrogen dioxide (NO₂), and/or nitrous oxide (N₂O)), in a mole ratio of about 1:10 to about 10:1. In certain embodiments, the mole ratio of methane to NOₓ is > 1, for example about 4:1 to about 2:1. In certain embodiments, the NOₓ contains a mixture of NO and NO₂. In certain embodiments, the NOₓ is at least about 50 weight percent NO, or at least about 90 weight percent NO, or is essentially NO. In certain other embodiments, the NOₓ is at least about 50 weight percent NO₂, or at least about 90 weight percent NO₂, or is essentially NO₂.

The exhaust gas treated by the present method can be derived from a variety of sources including natural gas vehicles, heavy duty natural gas engines, gas turbines, CO₂ generation for greenhouses, marine internal combustion engines, and other engines that are fueled by natural gas, compressed natural gas, liquefied natural gas, biogas, liquefied petroleum gas (propane), compressed natural gas, alcohol, wood gas, petroleum fuels blended with any of the above, and the like. In certain embodiments, the exhaust gas is derived from combusting a combination of fuels, such as diesel fuel and natural gas, for example in a ratio of 80:20, 70:30, or 60:40.

In certain embodiments, the exhaust gas is derived from a lean-burn combustion process, such as that produced by gas turbines. When such combustion processes operate at or near stoichiometric air/fuel ratios, sufficient oxygen may be present. In other embodiments, additional oxygen is introduced into the exhaust gas upstream of the catalyst, for example by an air inlet, to increase the amount of excess oxygen in the exhaust gas to be treated. For such embodiments, exhaust gas generation is not limited to only lean-burn combustion processes but can include exhaust gas generated under certain fuel-rich conditions. In preferred embodiments, the exhaust gas is generated from a combustion process operating at a lambda of at least 1.0 and preferably greater than 1.0. As used herein, lambda is the ratio of actual air-to-fuel ratio to stoichiometry for a given combustible mixture. In certain other embodiments, particularly for gas-fire turbines, CO₂ generation for greenhouses, fired heaters, and the like, the exhaust gas is generated when the gas turbine is operating at under excess combustion air conditions, preferably at least about 5 percent excess air, more preferred about 10 percent excess air, and even more preferred about 15 percent excess air. As used herein, a certain percentage of excess combustion air means that the combustion is operating with that percentage air in excess of the required stoichiometric amount.

The contacting step is preferably performed at a temperature to achieve high conversion rate of the hydrocarbon. If the reaction temperature is too low, the catalyst does not demonstrate sufficient activity to achieve a desirable reaction rate. However, if the reaction temperature is too high, the durability of the catalyst is affected. In certain embodiments, the exhaust gas temperature when contacting the catalyst is about 250 °C to about 950 °C, for example about 350 °C to about 650 °C, about 500 °C to about 650 °C, and about 700 °C to about 800 °C.

### EXAMPLES

### Examples 1 - 4 and Comparative Examples C1 and C2:

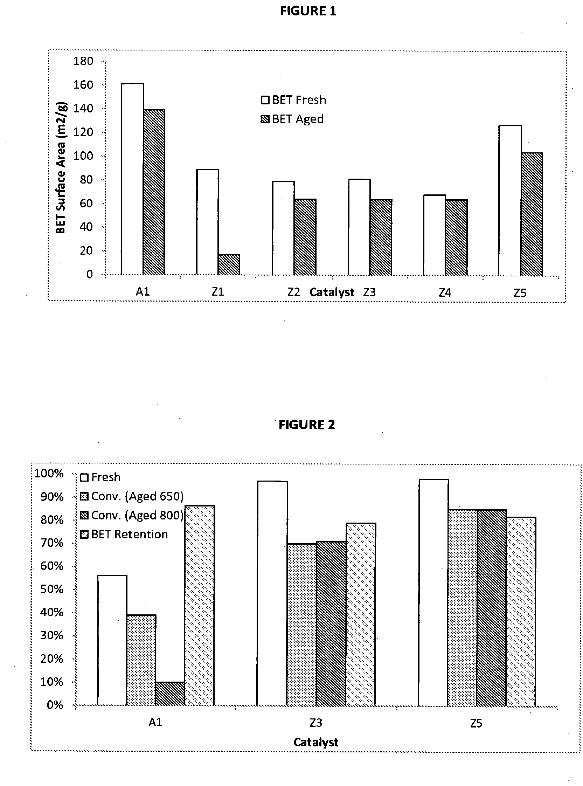

Commercially available samples of alumina and zirconia were obtained (A1 and Z1, respectively). Samples of commercially available rare earth metal stabilized zirconia were also obtained (Z2 - Z5). The composition of these materials is provided in Table 1. The BET surface area of each of these samples was measured and recorded in Table 1. The samples were then subjected to a calcination process at 900 °C for 4 hours in air and the BET surface area was measured again. These results are also recorded in Table 1. The data indicates that alumina and rare earth metal stabilized zirconia retain a significant portion of their surface area after calcination. This data is also provided in Figure 1.

**Table 1**

| Example | Support | Chemical composition (in wt.%) | BET SSA (m2/g) (fresh) | BET SSA (m2/g) (after aging) |
|---|---|---|---|---|
| C1 | A1 | Al₂O₃ (100%) | 161 | 139 |
| C2 | Z1 | ZrO₂ (100%) | 89 | 17 |
| C3 | Z2 | ZrO₂ (85%); La₂O₃ (2%); Nd₂O₃ (13%) | 79 | 64 |
| C4 | Z3 | ZrO₂ (80%); La₂O₃ (5%); Nd₂O₃ (15%) | 81 | 64 |
| C5 | Z4 | ZrO₂ (80%); La₂O₃ (4%); Nd₂O₃ (8%); Y₂O₃ (8%) | 68 | 64 |
| 1 | Z5 | ZrO₂ (81 %); Y₂O₃ (8%); SiO₂ (11%) | 127 | 104 |

### Example 2 and Comparative Examples C6 and C7

Samples having the same composition as A1 and Z1 - Z5 above were loaded with palladium using a conventional loading technique.

The samples designated A1, Z3, and Z5 were coated on a honeycomb monolith core to achieve a loading of about 150 g/ft³ (5.3 g/l) palladium. These samples were then subjected to a simulated lean burn exhaust gas using a SCAT rig. The feed gas contained the following concentration of components (based on weight): CH₄ =1120ppm, CO=800ppm, O₂=11%, H₂O=10%, CO₂=10%, N₂ balance, and had a gas hourly space velocity of 100,000 h⁻¹ and a temperature of 450 °C. The feed gas was passed through the catalyst coated core obtain a treated exhaust gas. The methane concentration of the treated exhaust gas was measured and recorded in Table 2 when the core was fresh (i.e., not aged). Similar testing was performed on similarly loaded cores after the catalyst was hydrothermally aged at 650 °C for 48 hours in 10% H₂O. Similar testing was also performed on similarly loaded cores after the catalyst was hydrothermally aged at 800 °C for 64 hours in 5% H₂O. The methane conversion efficiency of these samples are provided in Table 2.

When fresh, the stabilized ZrO₂ supported catalysts are noticeably more active than the alumina supported Pd reference catalyst (A1/Pd). After hydrothermal aging at 650 °C for 48 hours in 10% H₂O, the stabilized ZrO₂ catalysts only suffer a slight change of methane conversion. These ZrO₂ catalysts are so stable that even after hydrothermal aging at 800 °C for 64 hours in 5% H₂O, the stabilized catalyst still maintain high methane conversion. In contrast, the reference alumina supported Pd catalyst shows severe deactivation after similar hydrothermal aging at 800 °C. Thus, the catalyst activity is not solely associated with the BET surface area. Instead, a synergistic effect is demonstrated between the palladium, zirconia, and rare earth metal.

The methane oxidation activity of the Pd catalysts can be further improved by the addition of Pt. For example, the addition of 20 g/ft³ (0.71 g/l) of Pt on to the Z5/Pd (Pd 150 g/ft³ (5.3 g/l)) catalyst (aged at 650 °C for 48 hours in 10% H₂O) improves the methane conversion at 450 °C from 85% to 93%.

**Table 2**

| Example | Catalysts | Fresh | After 650C/48h/10% H₂O aging | After 800C/64h/5% H₂O aging |
|---|---|---|---|---|
| C6 | A1/Pd | 56% | 39% | 10% |
| C7 | Z3/Pd | 79% | 70% | 71% |
| 2 | Z5/Pd | 98% | 85% | 85% |

### Example 7 and Comparative Example C4:

Samples having the same composition as A1 and Z5 above were loaded with palladium and platinum in a ratio of about 5:1 using a conventional loading technique. The samples were coated on a honeycomb monolith core to achieve a loading of about 20g/ft³ (0.71 g/l) platinum and 100g/ft³ (3.53 g/l) palladium. These samples were then subjected to a simulated lean burn exhaust gas using a SCAT rig to test for conversion of C₁-C₃ saturated hydrocarbons.

Besides significantly improved methane oxidation activity, the stabilized ZrO₂ catalysts also exhibit substantially improved oxidation activity for other saturated short-chain hydrocarbons, such as ethane and propane. Table 3 compares the hydrocarbon conversion efficiency at 450 °C on an alumina supported PtPd and a stabilized ZrO₂ (Z5) supported PtPd catalyst, wherein both catalyst are hydrothermally aged at 650 °C for 48 hours in 10% H₂O.

**Table 3**

| Sample | Catalysts | CH₄ | C₂H₆ | C₃H₈ |
|---|---|---|---|---|
| C8 | A1/PtPd | 28% | 63% | 78% |
| 3 | Z5/PtPd | 64% | 90% | 94% |

## Claims

1. A method for treating exhaust gas comprising:
a. contacting an exhaust gas containing an excess of oxygen and at least one saturated hydrocarbon to an oxidizing catalyst; and
b. oxidizing at least a portion of saturated hydrocarbon to produce CO₂ and H₂O;
wherein the oxidizing catalyst comprises at least one noble metal on a support containing at least 75 weight percent zirconia and a stabilizing amount of up to 20 weight percent silica and 1 to 20 weight percent yttrium oxide, wherein the saturated hydrocarbon is methane, and wherein the exhaust gas has a methane concentration of 10 ppmv to 10,000 ppmv.

2. The method of claim 1, wherein said noble metal comprises at least one of palladium and platinum.

3. The method of claim 1, wherein said yttrium oxide and said zirconia are present together in a solid solution.

4. The method of claim 3, wherein said noble metal is impregnated on to said solid solution.

5. The method of claim 1, wherein said support consists essentially of 5 to 15 weight percent yttrium oxide, 5 to 15 weight percent silica, and at least 75 weight percent zirconia.

6. The method of claim 5, wherein said noble metal consists essentially of palladium or a combination of palladium and platinum.

7. The method of claim 1, wherein said exhaust gas is derived from combustion a fuel comprising a majority of methane.

8. The method of claim 1, wherein said contacting occurs at a temperature of 350 to 650 °C.

## Patentansprüche

1. Verfahren zur Behandlung von Abgas, das Folgendes umfasst:
a. Inkontaktbringen eines Abgases, das einen Sauerstoffüberschuss und mindestens einen gesättigten Kohlenwasserstoff enthält, mit einem oxidierenden Katalysator und
b. Oxidieren mindestens eines Teils des gesättigten Kohlenwasserstoffs, um CO₂ und H₂O zu produzieren;
wobei der oxidierende Katalysator mindestens ein Edelmetall auf einem Träger umfasst, der mindestens 75 Gewichtsprozent Zirconiumdioxid und eine stabilisierende Menge von bis zu 20 Gewichtsprozent Siliciumdioxid und 1 bis 20 Gewichtsprozent Yttriumoxid enthält, wobei der gesättigte Kohlenwasserstoff Methan ist und wobei das Abgas eine Methankonzentration von 10 ppmv bis 10.000 ppmv aufweist.

2. Verfahren nach Anspruch 1, wobei das Edelmetall mindestens eines von Palladium und Platin umfasst.

3. Verfahren nach Anspruch 1, wobei das Yttriumoxid und das Zirconiumdioxid zusammen in einer festen Lösung vorliegen.

4. Verfahren nach Anspruch 3, wobei das Edelmetall auf die feste Lösung imprägniert wird.

5. Verfahren nach Anspruch 1, wobei der Träger im Wesentlichen aus 5 bis 15 Gewichtsprozent Yttriumoxid, 5 bis 15 Gewichtsprozent Siliciumdioxid und mindestens 75 Gewichtsprozent Zirconiumdioxid besteht.

6. Verfahren nach Anspruch 5, wobei das Edelmetall im Wesentlichen aus Palladium oder einer Kombination von Palladium und Platin besteht.

7. Verfahren nach Anspruch 1, wobei das Abgas von der Verbrennung eines Brennstoffs abgeleitet ist, der einen Großteil an Methan umfasst.

8. Verfahren nach Anspruch 1, wobei das Inkontaktbringen bei einer Temperatur von 350 bis 650 °C stattfindet.

## Revendications

1. Procédé de traitement de gaz d'échappement comprenant :
a. la mise en contact d'un gaz d'échappement contenant un excès d'oxygène et au moins un hydrocarbure saturé avec un catalyseur d'oxydation ; et
b. l'oxydation d'au moins une partie de l'hydrocarbure saturé pour produire du CO₂ et H₂O ;
dans lequel le catalyseur d'oxydation comprend au moins un métal noble sur un support contenant au moins 75 pour cent en poids d'oxyde de zirconium et une quantité stabilisante allant jusqu'à 20 pour cent en poids de silice et de 1 à 20 pour cent en poids d'oxyde d'yttrium, l'hydrocarbure saturé étant le méthane et le gaz d'échappement ayant une concentration de 10 ppmv à 10 000 ppmv.

2. Procédé selon la revendication 1, dans lequel ledit métal noble comprend au moins l'un du palladium et du platine.

3. Procédé selon la revendication 1, dans lequel ledit oxyde d'yttrium et ledit oxyde de zirconium sont présents conjointement dans une solution solide.

4. Procédé selon la revendication 3, dans lequel ledit métal noble est imprégné sur ladite solution solide.

5. Procédé selon la revendication 1, dans lequel ledit support est essentiellement constitué de 5 à 15 pour cent en poids d'oxyde d'yttrium, de 5 à 15 pour cent en poids de silice, et d'au moins 75 pour cent en poids d'oxyde de zirconium.

6. Procédé selon la revendication 5, dans lequel ledit métal noble est essentiellement constitué de palladium ou d'une combinaison de palladium et de platine.

7. Procédé selon la revendication 1, dans lequel ledit gaz d'échappement est dérivé de la combustion d'un carburant comprenant une majorité de méthane.

8. Procédé selon la revendication 1, dans lequel ladite mise en contact se produit à une température de 350 à 650°C.
